Europäisches Patentamt

European Patent Office

Office européen des brevets

(19)

(11) **EP 0 656 596 B1**

(12) **FASCICULE DE BREVET EUROPEEN**

(45) Date de publication et mention
de la délivrance du brevet:
**14.03.2001 Bulletin 2001/11**

(51) Int Cl.[7]: **G06F 7/00**

(21) Numéro de dépôt: **94118275.0**

(22) Date de dépôt: **21.11.1994**

(54) **Contrôleur à logique floue**

Fuzzy-Regler

Fuzzy logic controller

(84) Etats contractants désignés:
**AT BE CH DE DK ES FR GB GR IE IT LI LU MC NL
PT SE**

(30) Priorité: **02.12.1993 FR 9314455**

(43) Date de publication de la demande:
**07.06.1995 Bulletin 1995/23**

(73) Titulaire: **CSEM
Centre Suisse d'Electronique et de
Microtechnique S.A.
2007 Neuchâtel (CH)**

(72) Inventeur: **Landolt, Olivier
CH-2000 Neuchâtel (CH)**

(74) Mandataire: **Ravenel, Thierry Gérard Louis et al
I C B,
Ingénieurs Conseils en Brevets SA,
7, rue des Sors
2074 Marin (CH)**

(56) Documents cités:
- **IEEE TRANSACTIONS ON SYSTEMS, MAN, AND
  CYBERNETICS, vol.SMC-15, no.1, Janvier 1985,
  NEW YORK USA. pages 116 - 132 T. TAKAGI ET
  AL. 'Fuzzy Identification of Systems and Its
  Applications to Modeling and Control'**
- **FUZZY SETS AND SYSTEMS, vol.58, no.3, 24
  Septembre 1993, AMSTERDAM, NL. pages 329 -
  337, XP000396611 CHING-CHANG WONG
  'Realization of linear outputs by using mixed
  fuzzy logics'**

**Description**

La présente invention a pour objet un contrôleur à logique floue de type analogique permettant la mise en oeuvre d'un ensemble de règles de comportement auxquelles sont respectivement associées des valeurs de sortie qui peuvent s'exprimer comme autant de polynômes d'un même ensemble de variables d'entrée, les coefficients desdits polynômes ayant des valeurs prédéterminées (éventuellement égales à zéro) propres aux différentes règles, et chacune desdites règles comportant aux moins une condition consistant en une relation, plus ou moins vraie, entre une desdites variables d'entrée et une valeur de référence.

Les contrôleurs à logique floue classiques sont prévus pour permettre la mise en oeuvre de règles floues dont les valeurs de sortie sont des constantes prédéterminées. Ces règles floues définissent une association entre un sous-ensemble flou d'un espace d'entrée et un point dans un espace de sortie. Typiquement, une telle règle floue classique aura la forme suivante:

$$\text{SI } x_1 \approx p_1 \text{ ET } x_2 \approx p_2 \text{ ALORS } y = u$$

où $p_1$ et $p_2$ sont des valeurs de référence qui définissent le centre d'un domaine ou sous-ensemble flou, et où $u$ est une grandeur prédéterminée (numérique ou éventuellement vectorielle) constante qui définit un point dans un espace de sortie de dimension quelconque.

Une règle floue définissant, comme nous venons de le dire, une association entre un domaine d'un espace d'entrée et un point d'un espace de sortie, un ensemble de telles règles permet de définir, région par région, une relation entre des variables dans l'espace d'entrée et des variables dans l'espace de sortie.

Lorsque les domaines (ou régions) de l'espace d'entrée associés aux différentes règles sont disjoints, la relation définie par l'ensemble de règles fait simplement correspondre chaque domaine avec le point correspondant de l'espace de sortie. En revanche, lorsque les domaines de l'espace d'entrée associés aux différentes règles se chevauchent, il est nécessaire de se donner un algorithme pour permettre de déterminer, de façon univoque, une grandeur de sortie unique globale pour l'ensemble de règles dans les zones de chevauchement des domaines.

L'algorithme le plus couramment utilisé pour déterminer une valeur de sortie globale pour un ensemble de règles est le calcul du centre de gravité. Ce calcul du centre de gravité revient au calcul d'une moyenne pondérée des grandeurs de sortie des différentes règles, le facteur de pondération étant le poids (ou degré de pertinence) de chacune de ces régles. Signalons, toutefois, que d'autres algorithmes ont été proposés pour remplir la même fonction, et que tous ces algorithmes sont connus généralement sous le nom d'algorithmes de "défuzzification".

Les grandeurs de sortie de règles floues du type de celles décrites ci-dessus étant constantes, la pente de la relation liant les grandeurs d'entrée et de sortie n'est pas définie explicitement par les règles elles-mêmes mais découle de l'algorithme de combinaison des conclusions des règles dans les zones de chevauchement.

Dans certaines applications de la logique floue, la façon exacte selon laquelle la valeur de sortie globale de l'ensemble de règles varie peut être importante dans certaines régions. Une formulation un peu plus générale de la notion de règles floues a donc été proposée notamment par T. Terano, K. Asai et M. Sugeno dans l'ouvrage "Fuzzy systems theory and its application" Academic Press 1992. Selon cette nouvelle formulation, les valeurs de sortie des règles floues ne sont plus forcément des grandeurs constantes mais peuvent également être des fonctions des valeurs d'entrée. Une telle règle s'exprime alors par exemple par:

$$\text{SI } x_1 \approx p_1 \text{ ET } x_2 \approx p_2 \text{ ALORS } y = g(x_1, x_2)$$

La présente invention concerne plus particulièrement des règles floues dont les valeurs de sorties peuvent s'exprimer comme des fonctions polynomiales.

Pour évaluer une valeur de sortie globale d'un ensemble de règles floues dont les valeurs de sortie respectives peuvent s'exprimer comme des fonctions polynomiales des variables d'entrée, on procédera classiquement de la façon suivante:

- d'abord, en fonction des variables d'entrée, on évaluera pour chacune des règles, d'une part sa valeur de sortie, c'est à dire la valeur prise par un polynôme associé à ladite règle et, d'autre part, le poids ou degré de pertinence de ladite règle;

- ensuite à partir des différentes valeurs de sortie et en tenant compte du poids de chaque règle, on calculera, en mettant en oeuvre un algorithme de "défuzzification", la valeur de sortie globale de l'ensemble de règles.

Comme on peut s'en rendre compte, la manière de procéder exposée ci-dessus, exige d'évaluer la valeur d'un polynôme différent pour chaque règle. Dans le cas d'une mise en oeuvre du procédé à l'aide d'un dispositif analogique, un circuit électronique destiné à évaluer un polynôme doit, par conséquent, être prévu pour chaque règle de l'ensemble de règles. La mise en oeuvre du procédé qui vient d'être décrit à l'aide de circuits analogiques présente donc l'inconvénient d'être coûteuse en matériel.

Un but de la présente invention est donc de fournir un contrôleur à logique floue de type analogique fonctionnant selon un procédé dont la mise en oeuvre est moins coûteuse en matériel.

A cet effet, la présente invention a pour objet un contrôleur à logique floue de type analogique permettant la mise en oeuvre d'un ensemble de règles de comportement auxquelles sont respectivement associées des valeurs de sortie qui peuvent s'exprimer comme autant de polynômes, les coefficients desdits polynômes ayant des valeurs prédéterminées propres aux différentes règles, et chacune desdites règles comportant au moins une condition consistant en une relation, plus ou moins vraie, entre une variable d'entrée et une valeur de référence, ledit contrôleur comprenant :

- des premiers moyens pour déterminer le poids de chacune des règles de comportement, ledit poids étant déterminé par combinaison des résultats de comparaison des valeurs des variables d'entrée avec les valeurs de référence pour les différentes règles, ledit contrôleur étant caractérisé en ce qu'il comprend encore:
- des deuxièmes moyens pour évaluer, pour chacun desdits coefficients, une valeur globale dudit coefficient, ladite valeur globale étant déterminée à partir des différentes valeurs dudit coefficient propres aux différentes règles, en tenant compte desdits poids respectifs desdites règles, et
- des troisièmes moyens pour fournir, en sortie dudit contrôleur, la valeur d'un polynôme en ledit ensemble de variables d'entrée, les coefficients dudit polynôme étant lesdites valeurs globales fournies par lesdits deuxièmes moyens.

Grâce aux caractéristiques de la présente invention exposées ci-dessus, l'évaluation d'une valeur de sortie globale pour un ensemble de règles floues ne requiert qu'un seul circuit d'évaluation de la valeur prise par un polynôme, et cela quel que soit le nombre de règles mises en oeuvre.

Un avantage de la présente invention est que le circuit d'évaluation du polynôme n'intervient qu'à la fin du procédé mis en oeuvre par le contrôleur analogique. Grâce à cette caractéristique, il est relativement aisé de concevoir un circuit intégré qui puisse être configuré, à choix, soit comme contrôleur analogique pour un ensemble de règles floues classiques à sorties multiples, soit comme contrôleur analogique pour un ensemble de règles floues à une valeur de sortie qui est une fonction polynomiale des variables d'entrée.

Selon un mode de réalisation préféré de la présente invention, les fonctions polynomiales des variables d'entrée sont des fonctions affines.

$$g(x_1, x_2) = a_o + a_1 \, x_1 + a_2 \, x_2$$

Dans ce dernier cas, chaque règle floue définit, d'une part la valeur de sortie y associée à un état particulier des entrées $(x_1, x_2) \approx (p_1, p_2)$ et, d'autre part, le gradient de la fonction $y(x_1, x_2)$ au voisinage de $(p_1, p_2)$.

Les applications les plus courantes de la logique floue concernent l'automatique, or les cas sont nombreux en réglage automatique où le gradient de la fonction de réglage est important dans certaines régions. Le fait de pouvoir spécifier explicitement le gradient de la fonction de réglage dans la conclusion d'une seule règle permet de remplacer plusieurs règles à sortie constante. Ceci représente potentiellement une économie de moyens matériels pour la mise en oeuvre d'une fonction par des règles floues. De plus, cette dernière variante de la présente invention est simple à réaliser sous forme d'un circuit électronique analogique, puisqu'elle ne nécessite qu'un seul circuit d'évaluation d'un polynôme et que, ce polynôme étant de degré 1, le circuit d'évaluation ne nécessite qu'un seul multiplieur par variable d'entrée, et cela quel que soit le nombre de règles à mettre en oeuvre.

D'autres caractéristiques et avantages de la présente invention apparaîtront au cours de la description qui va suivre, donnée uniquement à titre d'exemple et faite en se référant aux dessins annexés dans lesquels:

- la figure 1 est un schéma de principe d'un mode de réalisation d'un contrôleur analogique à logique floue selon la présente invention;
- la figure 2 est le schéma électronique d'un exemple de réalisation de la transconductance désignée par la référence 13 à la figure 1; et
- la figure 3 est le schéma électronique d'un exemple de réalisation des multiplieurs désignés par les références 7 et 9 à la figure 1.

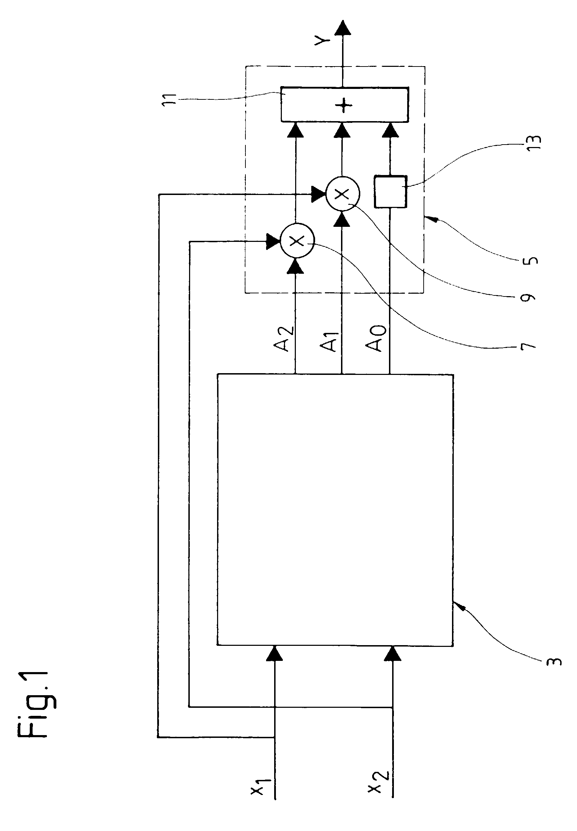

La figure 1 est le schéma de principe d'un contrôleur analogique à logique floue selon le mode de réalisation préféré de la présente invention. Ce contrôleur est prévu pour mettre en oeuvre un ensemble de règles dont les valeurs de sortie sont des combinaisons affines des variables d'entrée. Le nombre de ces règles peut être quelconque. Dans le présent exemple, les règles floues mises en oeuvre sont des règles à deux entrées et les variables d'entrée correspondantes sont désignées respectivement par $x_1$ et $x_2$ sur le dessin. La valeur de sortie de chacune des règles floues, mises en oeuvre ici, s'exprime donc comme une combinaison affine de la forme:

$$y = a_o + a_1 \, x_1 + a_2 \, x_2$$

En se référant, maintenant, au schéma de principe de la figure 1, on voit que le contrôleur analogique selon la présente invention se subdivise fonctionnellement en deux blocs. On voit, d'une part, un premier bloc qui, sur le dessin, se résume, en tout et pour tout, à une boîte rectangulaire référencée 3 et, d'autre part, un deuxième bloc dont on a représenté un certain nombre de constituants, et qui est délimité par un cadre en traits interrompus référencé 5.

Le premier bloc ou module 3 comporte, d'une part, des premiers moyens destinés à évaluer le poids (ou degré de pertinence) de chacune des règles floues à mettre en oeuvre et, d'autre part, des deuxièmes moyens destinés à déterminer, pour chacun des coefficients polynomiaux $a_o$, $a_1$ et $a_2$, une valeur globale $A_o$, $A_1$ ou $A_2$ dudit coefficient.

Le bloc ou module 5, quant à lui, comporte des moyens pour effectuer une combinaison affine des variables d'entrée $x_1$, $x_2$, en prenant comme coefficients les valeurs globales $A_o$, $A_1$ et $A_2$ fournies par le module 3.

Nous allons maintenant décrire plus en détail le fonctionnement du module 3. Dans le présent exemple, le module 3 est, comme nous l'avons déjà dit, réalisé sous la forme d'un circuit intégré analogique. Ce module est arrangé pour recevoir par ses entrées deux courants électriques dont les intensités correspondent respectivement aux valeurs prises par les deux variables d'entrée $x_1$, $x_2$.

Les premiers moyens (non représentés) destinés à évaluer le poids de chacune des règles à mettre en oeuvre, sont formés, dans cet exemple, par une pluralité d'éléments de circuit analogiques conçus, chacun, pour évaluer, à partir des intensités des deux courants reçus en entrée du module 3, le poids d'une des règles et pour fournir un courant représentatif de ce poids. Ces éléments de circuit peuvent, par exemple, avoir la forme de l'élément de circuit décrit dans la demande de brevet antérieure EP-A-0 617 359.

Les deuxièmes moyens (non représentés) destinés à déterminer une valeur globale pour chaque coefficient, sont formés, dans cet exemple, par trois éléments de circuit analogiques distincts prévu, chacun, pour déterminer le centre de gravité d'un des trois coefficients $a_o$, $a_1$ et $a_2$.

Chacun des éléments de circuit pour l'évaluation d'un centre de gravité se subdivise en autant de sous-éléments qu'il y a de règles à mettre en oeuvre, chacun de ces sous-éléments comportant, d'une part, une entrée reliée aux premiers moyens de façon à recevoir le courant représentatif du poids d'une des règles et, d'autre part, une source de tension préajustée dont le niveau est représentatif de la valeur du coefficient dans cette même règle.

Les différents sous-éléments formant l'élément de circuit analogique sont reliés les uns aux autres, et cet élément de circuit fournit en sortie une tension qui est le centre de gravité des tensions représentatives des valeurs du coefficient dans les différentes règles. Un élément de circuit analogique pour évaluer le centre de gravité est décrit, par exemple, dans la demande de brevet pendante déjà citée ci-dessus.

Le mode de fonctionnement du module 3, tel qu'il vient d'être décrit, est identique à celui que présenterait un contrôleur à logique floue prévu pour évaluer le centre de gravité des valeurs de sortie d'un ensemble de règles floues classiques ayant, chacune, pour conclusion un point fixe ($a_{oi}$, $a_{1i}$ et $a_{2i}$) dans un espace de sortie à trois dimensions. Grâce à cette équivalence, on pourra utiliser, pour réaliser la présente invention, un contrôleur à logique floue classique en sortie duquel il faudra simplement ajouter un module de combinaison affine correspondant au bloc 5 du schéma de la figure 1.

Nous allons maintenant décrire plus en détail le module de combinaison affine correspondant au bloc 5 de la figure 1. La fonction du module 5 est de fournir en sortie un courant dont l'intensité est représentative de la valeur de la combinaison affine des variables d'entrée $x_1$ et $x_2$, les coefficents de cette combinaison affine étant les trois valeurs globales $A_o$, $A_1$ et $A_2$ fournies par le module 3. Conformément à ce qui précède, le module 5 reçoit en entrée, d'une part, les tensions représentatives des trois coefficients $A_o$, $A_1$ et $A_2$, fournies par le bloc 3 et, d'autre part, les tensions dont les valeurs sont représentatives des deux variables d'entrée $x_1$ et $x_2$.

Comme nous l'avons déjà dit, la figure 1 est un schéma de principe et n'est donc pas le plan d'un circuit électronique réalisé. Dans ces conditions, on comprendra que la liaison représentée entre les entrées de $x_1$ et $x_2$ dans le bloc 3 et les entrées de $x_1$ et $x_2$ dans le bloc 5 est une liaison fonctionnelle et pas un simple conducteur.

Les variables d'entrée étant, conformément à ce qui a été décrit ci-dessus, fournies au bloc 3 sous forme de courants et au bloc 5 sous forme de tensions, le circuit réalisé comprendra soit une conversion courant/tension soit une conversion tension/courant.

En se référent à nouveau à la figure 1, on voit que le module 5 comporte une transconductance référencée 13, deux multiplieurs référencés respectivement 7 et 9 et un circuit d'addition référencé 11.

La transconductance 13 reçoit en entrée la tension représentative du coefficient $A_o$ et fournit par sa sortie, au circuit d'addition 11, un courant dont l'intensité est également représentative de ce même coefficient. Le multiplieur 7 reçoit en entrée la tension représentative du coefficient $A_2$ et la tension représentative de la variable d'entrée $x_2$, et fournit par sa sortie, au circuit d'addition 11, un courant représentatif du produit $x_2 A_2$. De façon identique, le multiplieur 9 fournit au circuit d'addition 11 un courant représentatif du produit $x_1 A_1$. Finalement le circuit d'addition 11 fourni en sortie un courant qui est la somme des courants qu'il reçoit en entrée, c'est à dire un courant dont l'intensité est représentative de la valeur de l'expression :

$$A_o + A_1\, x_1 + A_2\, x_2$$

Les grandeurs que le module 5 additionne pour fournir la valeur de la combinaison affine étant, dans le présent exemple, les intensités de courants électriques, le circuit d'addition peut être formé, en fait, par un simple noeud du circuit.

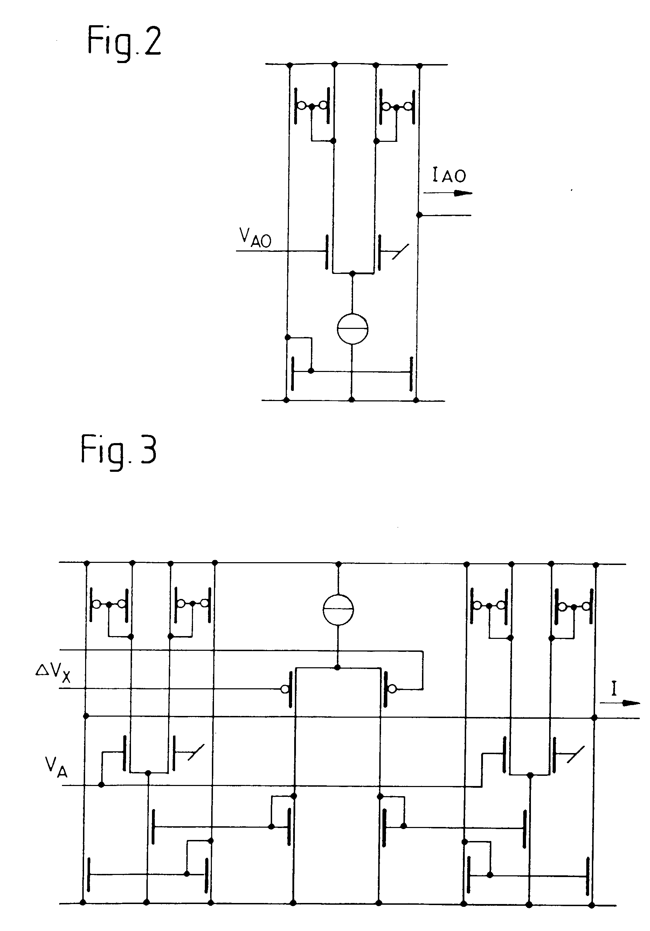

La figure 2 est le schéma électronique d'une transconductance (représentée par une boîte référencée 13 sur la figure 1) dont la fonction est de fournir en sortie un courant $I_{Ao}$ dont l'intensité est proportionnelle à la tension $V_{Ao}$ qu'elle reçoit en entrée. La conception de cet élément de circuit intégré est classique et le schéma de la figure 2 ne sera donc pas décrit plus avant.

La figure 3 est le schéma d'un exemple de réalisation des multiplieurs référencés 7 et 9 sur la figure 1. L'élément de circuit intégré représenté à la figure 3 reçoit donc en entrée, d'une part, une tension différentielle $\Delta V_x$ correspondant à la valeur d'une des variables d'entrée ($x_2$ pour le multiplieur 7 et $x_1$ pour le multiplieur 9) et, d'autre part, une tension $V_A$ correspondant à la valeur du coefficient correspondant. La fonction de cet élément de circuit est de fournir en sortie un courant I dont l'intensité est proportionnelle au produit des deux signaux x et A reçus en entrée. Le type de multiplieur représenté à la figure 3 est appelé multiplieur de Gilbert et est bien connu de l'homme du métier. Il ne sera donc pas non plus décrit plus avant.

Précisons finalement que la présente invention ne se limite pas à des contrôleurs appliquant des algorithmes qui mettent en oeuvre un calcul de centre de gravité, mais peut également être utilisée avec des contrôleurs appliquant d'autres algorithmes de "défuzzification".

## Revendications

1. Contrôleur à logique floue de type analogique permettant la mise en oeuvre d'un ensemble de règles de comportement auxquelles sont respectivement associées des valeurs de sortie qui s'expriment comme autant de polynômes, les coefficients desdits polynômes ayant des valeurs prédéterminées propres aux différentes règles, et chacune desdites règles comportant au moins une condition consistant en une relation, plus ou moins vraie, entre une desdites variables d'entrée (x) et une valeur de référence (p), ledit contrôleur comprenant :

   - des premiers moyens pour déterminer le poids de chacune des règles de comportement, ledit poids étant déterminé par combinaison des résultats de comparaison des valeurs des variables d'entrée avec les valeurs de référence dans les différentes conditions de ladite règle, ledit contrôleur étant caractérisé en ce qu'il comprend encore :
   - des deuxièmes moyens pour évaluer, pour chacun desdits coefficients, une valeur globale dudit coefficient, ladite valeur globale étant déterminée à partir des différentes valeurs dudit coefficient dans les différentes règles, en tenant compte desdits poids respectifs desdites règles, et

   - des troisièmes moyens pour fournir, en sortie dudit contrôleur, la valeur d'un polynôme en ledit ensemble de variables d'entrée, les coefficients dudit polynômes étant lesdites valeurs globales fournies par lesdits deuxièmes moyens.

2. Contrôleur à logique floue selon la revendication 1, caractérisé en ce que les valeurs de sortie dudit ensemble de règles s'expriment comme des polynômes de degré 1.

3. Contrôleur à logique floue selon la revendication 1, caractérisé en ce que lesdits deuxièmes moyens déterminent la valeur globale de chaque coefficient par un calcul de centre de gravité.

## Patentansprüche

1. Steuereinheit mit unscharfer Logik des analogen Typs, die die Ausführung einer Gesamtheit von Verhaltensregeln ermöglicht, denen jeweils Ausgangswerte zugeordnet sind, die durch ebenso viele Polynome ausgedrückt sind, wobei die Koeffizienten dieser Polynome vorgegebene, den verschiedenen Regeln eigentümliche Werte besitzen und jede dieser Regeln wenigstens eine Bedingung enthält, die aus einer mehr oder weniger wahren Beziehung zwischen einer der Eingangsvariablen (x) und einem Referenzwert (p) besteht, wobei die Steuereinheit umfaßt:

   - erste Mittel zum Bestimmen des Gewichts jeder der Verhaltensregeln, wobei das Gewicht durch Kombination der Vergleichsergebnisse der Werte der Eingangsvariablen mit den Referenzwerten unter den verschiedenen Bedingungen der Regel festgelegt ist, wobei die Steuereinheit dadurch gekennzeichnet ist, daß sie außerdem umfaßt:
   - zweite Mittel, die für jeden der Koeffizienten einen globalen Wert dieses Koeffizienten ermitteln, wobei der globale Wert anhand der verschiedenen Werte des Koeffizienten in den verschiedenen Regeln bestimmt wird, indem die jeweiligen Gewichte der Regeln berücksichtigt werden, und
   - dritte Mittel, die am Ausgang der Steuereinheit den Wert eines Polynoms aus der Gesamtheit der Eingangsvariablen liefern, wobei die Koeffizienten der Polynome die globalen Werte sind, die von den zweiten Mitteln geliefert werden.

2. Steuereinheit mit unscharfer Logik nach Anspruch 1, dadurch gekennzeichnet, daß die Ausgangswerte der Gesamtheit von Regeln als Polynome ersten Grades ausgedrückt sind.

3.  Steuereinheit mit unscharfer Logik nach Anspruch 1, dadurch gekennzeichnet, daß die zweiten Mittel den globalen Wert jedes Koeffizienten durch eine Schwerpunktsberechnung bestimmen.

**Claims**

1.  Analog fuzzy logic controller implementing a set of fuzzy rules with which are respectively associated output values expressed as many polynomials, the coefficients of said polynomials having predetermined values specific to the different rules, and each of said rules including at least one condition consisting of a fuzzy relationship, more or less true, between one of said input variables (x) and a reference value (p), said controller comprising :

    -   first means for determining the weight of each of the fuzzy rules, said weight being determined by combining results of comparison of the values of the input variables with the reference values in the different conditions of said rule; said controller being characterized in that it further comprises:
    -   second means for estimating, for each of said coefficients, a global value of said coefficient, said global value being determined starting from the different values of said coefficient in the different rules, taking into account said respective weights of said rules, and
    -   third means for delivering, as output of said controller, the value of a polynomial in said set of input variables, the coefficients of said polynomial being said global values delivered by said second means.

2.  Analog fuzzy logic controller according to claim 1, characterized in that the output values of said set of rules are expressed as polynomials of degree 1.

3.  Analog fuzzy logic controller according to claim 1, characterized in that said second means determine the global value of each coefficient by a center of gravity calculation.

Fig.1

# Fig.2

# Fig.3